# DEMANDE DE BREVET EUROPEEN

(11) **EP 1 315 116 A1**
(43) Date de publication de la demande: **28.05.2003**
(21) Numéro de dépôt: 02292800.6
(22) Date de dépôt: 08.11.2002
(51) Int. Cl.: G06K 7/00, G06K 7/10

(54) **Dispositif traçable par un identifiant électronique**

(30) Priorité: 09.11.2001 FR 0114558
(71) Demandeur: Allibert Equipement, 92000 Nanterre (FR)
(72) Inventeur: Pomes, Françoise, 78450 Chavenay (FR)

(57) **Abrégé**

L'invention propose une pièce traçable en matière plastique du type dans une partie de laquelle est incorporé un identifiant électronique (10) qui est constitué d'un circuit intégré (12) comportant une mémoire et d'une antenne (14) de premières dimensions et qui est apte à échanger des données avec un dispositif de lecture et/ou d'écriture (22) éloigné au maximum d'une première distance (d₁) de communication prédéterminée, caractérisé en ce qu'une deuxième antenne (16) de deuxièmes dimensions, qui est apte à communiquer sans contact électrique, notamment avec l'identifiant, est agencée à une distance (d) inférieure ou égale à la première distance prédéterminée (d₁) de l'identifiant (10) de façon à former un relais pour augmenter la première distance prédéterminée (d₁) à une deuxième distance maximale (d₂) d'échange des données entre l'identifiant (10) et le dispositif (22) de lecture et/ou d'écriture.

## Description

De façon à permettre la traçabilité de pièces telles que des emballages ou des produits, il est connu de rapporter une étiquette électronique aussi appelée identifiant électronique de type sans contact sur l'une de leurs parois. L'étiquette peut être fixée sur la pièce par collage, rivetage..., cette solution n'est pas satisfaisante. Des saletés peuvent s'immiscer entre l'étiquette et la paroi rendant difficile le nettoyage de la pièce. De plus l'étiquette doit être conditionnée dans une enveloppe ou un boîtier de protection. Cela augmente le nombre de composants à assembler et le coût de fabrication de l'emballage.

L'étiquette peut aussi être incorporée dans l'emballage.

Dans le domaine de la logistique, plus particulièrement des emballage de manutention en matière plastique telles que des bacs et des palettes, il est connu de surmouler la pièce autour de l'identifiant électronique.

L'identifiant électronique de type sans contact se compose d'un circuit intégré comportant notamment une mémoire dans laquelle sont stockées les informations d'identification de l'emballage et d'une antenne qui est reliée électriquement au circuit intégré pour qu'il puisse communiquer à distance avec un dispositif de lecture et/ou d'écriture adapté.

La communication est obtenue de façon connue par couplage électromagnétique à distance entre le circuit intégré et le dispositif de lecture et/ou d'écriture. La fréquence du champ électromagnétique est généralement comprise dans la gamme des fréquences radio, de ce fait le mode de communication est aussi appelé communication radio fréquence.

La communication peut être réalisée en mode lecture ou en mode lecture/écriture.

Dans le premier cas l'identifiant comporte des informations qui permettent d'identifier l'emballage et qui peuvent uniquement être lues par un dispositif adapté. Ainsi le cheminement de l'emballage peut être suivit par des dispositifs lecteurs agencés successivement sur son trajet.

Dans le second cas, les informations stockées par l'identifiant peuvent être lues et être modifiées.

Ainsi, il est possible de modifier les informations stockées dans la mémoire de l'identifiant, par exemple en fonction de l'évolution de l'emballage et/ou du produit qu'il contient.

En général l'identifiant électronique ne comporte pas sa propre source d'énergie, il est alors alimenté à distance par le dispositif lecture/écriture.

Pour ce faire le dispositif lecture/écriture émet un faisceau d'énergie sous forme d'un champ magnétique alternatif qui est reçu par l'antenne.

La distance maximale de lecture de l'identifiant dépend de la puissance du faisceau d'énergie émis par le dispositif de lecture/écriture et des dimensions de l'antenne.

Il existe des normes limitant la puissance d'énergie émise par le dispositif de lecture/écriture. En Europe la fréquence la plus utilisée est de 13,56 MHz, dans ce cas la puissance émise ne peut dépasser 1 Watt. Ainsi, pour augmenter la distance de lecture/écriture de l'identifiant, il est nécessaire d'augmenter les dimensions de l'antenne.

L'antenne peut se présenter sous la forme d'un enroulement en spiral plan d'un élément conducteur électrique de faible épaisseur tel qu'une bande de cuivre.

A titre d'exemple une antenne plane de forme carrée de 20mm de côte permet au circuit intégré de communiquer avec un dispositif de lecture/écriture de fréquence 13,56 MHz à une distance de 200 mm.

L'antenne ainsi que sa liaison électrique avec le circuit intégré associés sont fragiles. Pour permettre le surmoulage de matière plastique, l'identifiant doit être conditionné pour résister à la température et à la pression élevées, lors de l'étape d'injection.

Un procédé de conditionnement d'identifiant est divulgué dans le document FR-A-97.03456. Il consiste principalement à fixer la face plane de l'étiquette, constituée par l'antenne, sur un support de matière plastique qui est collé dans le moule avant l'injection. Le support permet de positionner l'étiquette à l'intérieur de la paroi de la pièce injectée et d'augmenter la résistance de l'antenne et de sa liaison avec le circuit intégré. Le coût de conditionnement est élevé, de plus l'identifiant reste fragile.

Un tel conditionnement augmente l'encombrement de l'identifiant.

L'identifiant électronique ne peut être agencé dans certaines zones de l'emballage qui présentent des dimensions inférieures à celles de l'identifiant conditionné. Il est ainsi impossible d'incorporer un identifiant électronique dans un porte étiquette (notamment un porte étiquette selon la standard "GALIA") destiné à être rapporté sur l'emballage car il ne présente aucune zone suffisamment grande pour recevoir l'identifiant conditionné.

De plus l'identifiant doit être agencé dans une zone de l'emballage suffisamment rigide pour éviter qu'une déformation de ladite zone ne provoque des contraintes dans l'identifiant susceptibles de casser l'antenne ou sa connexion avec le circuit intégré.

L'antenne peut aussi consister en un bobinage qui est conditionné avec le circuit intégré dans une ampoule cylindrique.

Pour augmenter la distance maximale de lecture, il faut augmenter les dimensions de la bobine. Cela pose un problème lorsque l'identifiant doit être incorporé dans une zone mince de l'emballage, le diamètre de l'identifiant devant rester inférieur à l'épaisseur de la zone mince. De plus, de façon similaire au cas précédent le coût du conditionnement est élevé.

Pour résoudre ces inconvénients, l'invention propose une pièce traçable en matière plastique du type dans une partie de laquelle est incorporé un identifiant électronique qui est constitué d'un circuit intégré comportant une mémoire et d'une antenne de premières dimensions et qui est apte à échanger des données avec un dispositif de lecture et/ou d'écriture éloigné au maximum d'une première distance de communication prédéterminée, caractérisé en ce qu'une deuxième antenne de deuxièmes dimensions, qui est apte à communiquer sans contact électrique, notamment avec l'identifiant, est agencée à une distance inférieure ou égale à la première distance prédéterminée de l'identifiant de façon à former un relais pour augmenter la première distance prédéterminée à une deuxième distance maximale d'échange des données entre l'identifiant et le dispositif de lecture et/ou d'écriture.

Selon d'autres caractéristiques de l'invention :
- la deuxième antenne est rapportée sur une face de la partie dans laquelle l'identifiant électronique est incorporé ;
- la deuxième antenne est imprimée sur une face de la partie dans laquelle l'identifiant électronique est incorporé ;
- la deuxième antenne est collée sur une face de la partie dans laquelle l'identifiant électronique est incorporé ;
- la deuxième antenne est portée par un élément supplémentaire rapporté sur la partie dans laquelle l'identifiant électronique est incorporé ;
- l'élément supplémentaire est une étiquette ;
- la pièce consiste en un emballage tel qu'un bac ;
- la pièce consiste en un porte étiquette.

L'invention propose aussi un procédé de fabrication d'une pièce traçable du type précédent, caractérisé en ce que l'identifiant électronique est incorporé lors d'une étape de moulage dans une partie du dispositif, en ce que la pièce est démoulée, puis en ce que la deuxième antenne est agencée à une distance inférieure ou égale à la première distance prédéterminée de l'identifiant.

Selon une autre caractéristique du procédé préalablement à l'étape de moulage, l'identifiant électronique est conditionné pour faciliter sa manipulation.

D'autres caractéristiques et avantages de l'invention apparaîtront à la lecture de la description détaillée qui suit, pour la compréhension de laquelle on se reportera aux dessins annexés parmi lesquels :
- la figure 1 est une vue en perspective à grande échelle d'un identifiant électronique ;
- la figure 2 est une vue en coupe et en perspective d'un bac de manutention équipé d'un identifiant électronique et d'une antenne relais conformément à l'invention ;
- la figure 3 est une vue en coupe et en détail de la paroi dans laquelle est incorporé un identifiant électronique à proximité duquel une antenne relais est rapportée conformément à l'invention ;
- la figure 4 est une vue de face en détail de la paroi dans laquelle est incorporé un identifiant électronique à proximité duquel une antenne relais est rapportée conformément à l'invention ;
- la figure 5 est une vue en coupe, selon la ligne 5-5 de la figure 4, de la paroi dans laquelle un identifiant électronique est incorporé et sur la face externe de laquelle une antenne relais est collée conformément à l'invention ;
- la figure 6 est une variante de réalisation selon laquelle l'antenne relais est rapportée sur une étiquette autocollante ;
- les figures 7 et 8 représentent d'autres variantes de réalisation de l'invention ;
- la figure 9 représente partiellement un moule d'injection d'un bac de manutention en matière plastique équipé d'un dispositif de maintien et de positionnement de l'identifiant pendant l'étape de moulage.

L'invention propose d'utiliser un identifiant 10, par exemple du type de celui fabriqué par la société INSIDE TECHNOLIGIES et commercialisé sous la marque déposée IC.Link, qui est constitué d'un circuit intégré 12 assemblé sur une plaquette de support 13 et d'une antenne principale 14, en association sans contact électrique avec une antenne 16 intermédiaire ou antenne relais avec laquelle il peut communiquer. L'antenne intermédiaire permet d'augmenter la distance de communication de l'identifiant 10 avec un dispositif de lecture/écriture adapté.

Un tel identifiant 10 est de petites dimensions. A titre d'exemple, il se présente sous la forme d'une pastille de quelques dixièmes de millimètres d'épaisseur et de 1 à 2 millimètres de coté.

L'antenne principale 14 est avantageusement fixée sur le circuit intégré 12 sans dépasser les dimensions du support 13 ce qui lui confère une rigidité et une résistance importante.

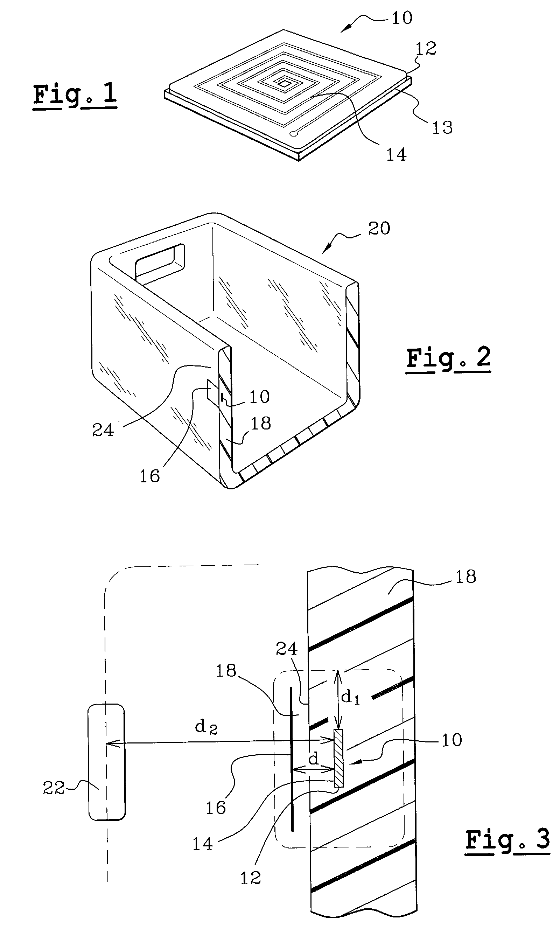

Dans la suite de la description, à titre d'exemple non limitatif, la pièce traçable est un emballage, plus particulièrement un bac de manutention 20 en matière plastique, représenté partiellement en coupe à la figure 2. L'identifiant 10 est incorporé dans l'une de ses parois 18.

La pièce traçable est obtenue par un procédé de moulage de matière plastique notamment par injection, par thermoformage, par rotomoulage, par soufflage...

Le bac de manutention 20 est avantageusement obtenu par injection de matière plastique.

L'identifiant 10, notamment l'antenne principale 14 et sa liaison avec le circuit intégré 12, est suffisamment rigide et solide pour que lors de l'injection du bac 20, il résiste à la pression et à la température élevées. Les déformations de l'identifiant 10 dues aux contraintes thermiques et mécaniques sont suffisamment faibles pour ne pas provoquer la rupture de l'antenne principale 14. L'identifiant 10 peut ainsi être incorporé dans la paroi 18 du bac 20 sans nécessiter de protection.

Lorsque l'identifiant 10 est alimenté électriquement, notamment par un champ magnétique alternatif, il permet de communiquer avec un dispositif 22 lecture/écriture adapté qui peut être éloigné d'une première distance maximale prédéterminée d₁ représenté en traits interrompus à la figure 3. Etant donné les normes en vigueurs et les petites dimensions de l'antenne principale 14, la première distance d₁ prédéterminée est de l'ordre de quelques millimètres. Cette distance étant trop faible pour un grand nombre d'applications, telles que la traçabilité des bacs pour la logistique, une antenne intermédiaire 16 est agencée à une distance d de l'identifiant qui est inférieure à la première distance d₁ prédéterminée. L'antenne intermédiaire 16 permet ainsi d'augmenter la première distance de communication d₁ de l'identifiant à une deuxième distance prédéterminée d₂ dépendant principalement des dimensions de l'antenne intermédiaire 16.

Les dimensions de l'identifiant 10, de l'antenne intermédiaire 16 ainsi que les distances d, d₁ et d₂ ne sont représentées sur les figures qu'à titre d'illustration.

En fonction de l'application à laquelle le bac est destiné, il est possible de déterminer les dimensions de l'antenne intermédiaire 16 de façon que la deuxième distance d₂ prédéterminée soit supérieure ou égale à la distance maximale entre l'identifiant 10 et le dispositif lecteur/récepteur 22.

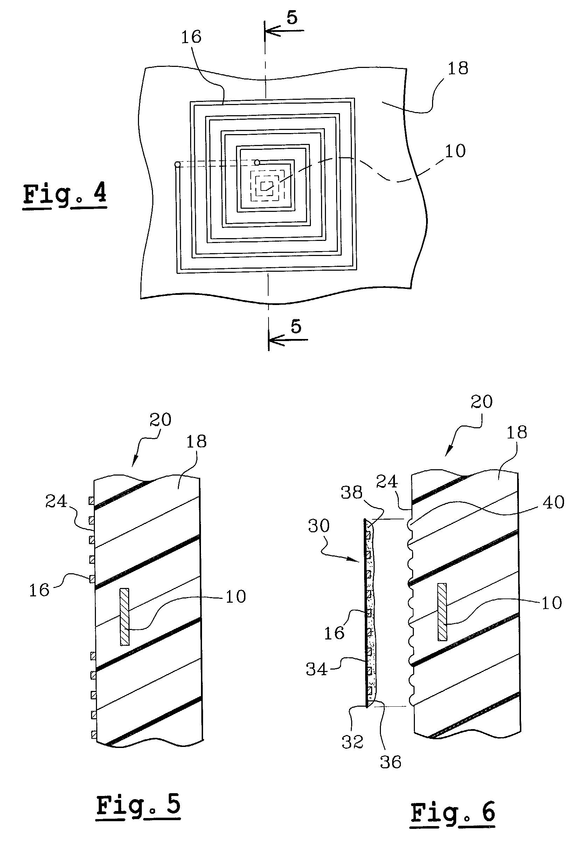

A titre d'exemple l'antenne intermédiaire 16 peut consister en un circuit conducteur enroulé en forme de spirale plane fermée qui est rapporté sur la face externe 24 de la paroi 18 du bac 20 à proximité de l'identifiant 10 conformément aux figures 4 et 5.

L'antenne intermédiaire 16 peut être collée sur la face externe 24 de la paroi 18. L'antenne intermédiaire 16 peut aussi être imprimée directement sur la face externe 24, notamment par sérigraphie d'encre conductrice.

Selon une variante l'antenne intermédiaire 16 peut aussi être fixée sur un élément supplémentaire qui est rapporté sur la face externe 24 de la paroi 18, telle qu'une étiquette 30 autocollante ou un porte étiquette.

Ces solutions sont simples et économiques à mettre en oeuvre.

Une telle réalisation est représentée en vue en coupe éclatée à la figure 6. L'étiquette 30 est constituée d'une feuille 32 de papier sur la face externe 34 de laquelle peuvent être imprimées des informations, telles que des codes barres ou la désignation du produit stocké dans le bac 20, et sur la face interne 36, en vis à vis du bac 20, de laquelle est fixée, avantageusement par impression, l'antenne intermédiaire 16.

La face interne 36 est ensuite recouverte de colle 38 pour pouvoir adhérer sur la face externe 24 de la paroi 18 du bac 20.

Cette solution est très avantageuse. La fixation de l'antenne intermédiaire 16 est très simple. De plus l'antenne 16 est protégée par la feuille 32.

En fonction des conditions d'utilisation du bac 20 il est facile de changer l'étiquette 30 et les dimensions de l'antenne 16 pour s'adapter aux distances de lecture/écriture requises.

La zone de la paroi 18 du bac 20 sur laquelle est collée l'étiquette 30 est recouverte de picots 40 ou perles, pour faciliter le décollement de l'étiquette.

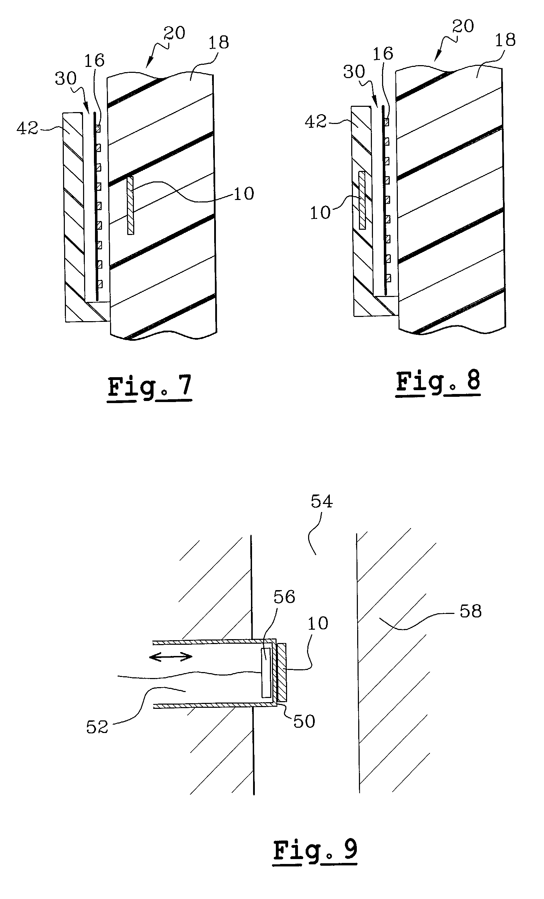

Selon une autre variante représentée à la figure 7, le bac 20 est équipé d'un porte étiquette 42. L'antenne intermédiaire 16 peut être imprimée sur la face externe 34 de l'étiquette 30 qui est glissée entre le porte étiquette et la face externe 24 du bac 20.

Selon une variante, non représentée, l'antenne 16 peut aussi être imprimée sur le porte étiquette.

Lorsque la gestion et l'utilisation des bacs sont semi-automatisées, les informations imprimées sur l'étiquette 30 peuvent être visualisées par les opérateurs et les informations stockées dans la mémoire de l'identifiant peuvent être lues et modifiées par un dispositif lecteur/récepteur.

Par exemple, dans le cas de la location des bacs 20 de manutention, les utilisateurs ont des dispositifs de lecture/écriture et de conditions d'exploitation différentes. Le changement de l'étiquette 30 et des dimensions de l'antenne intermédiaire 16 permet d'adapter de façon optimale la traçabilité des bacs 20 à chaque utilisateur.

L'invention permet aussi d'équiper facilement et à faible coût une pièce qui n'est pas traçable électroniquement.

Cela peut être obtenu en équipant la pièce à tracer d'une autre pièce traçable.

Lorsqu'un utilisateur possède un parc d'emballages qui ne sont pas traçables, l'invention lui offre la possibilité de transformer ses emballages en emballages traçables sans être obliger de les renouveler.

Par exemple, conformément à la figure 8, un bac de manutention 20 est équipé d'un accessoire tel qu'un porte étiquette 42 dans lequel est incorporé un identifiant électronique 10 et à proximité duquel est agencée une antenne intermédiaire 16 selon l'invention.

L'adaptation des bacs selon l'invention est facile et économique par rapport à une opération de reprise de tous les bacs pour rapporter un identifiant électronique de façon connue, ou à un remplacement de tous les bacs non traçables.

De façon similaire aux solutions antérieures l'antenne intermédiaire 16 peut être fixée sur une étiquette 30.

L'identifiant 10 ne nécessitant aucun conditionnement de protection particulier, son incorporation dans un emballage provoque un faible surcoût de fabrication.

Cependant l'identifiant 10 peut être conditionné de façon à faciliter sa manipulation. Par exemple, il peut être revêtu au moins partiellement d'une matière compatible chimiquement avec la matière plastique du bac 20.

L'invention permet notamment de s'affranchir de la fragilité de la liaison électrique entre l'antenne principale et le circuit intégré des identifiants utilisés classiquement pour ce type d'application.

Il est aussi possible d'intégrer un identifiant électronique dans une zone d'une pièce susceptible de se déformer sans risque de détérioration de ladite liaison électrique.

L'invention permet aussi à partir d'un identifiant électronique unique et incorporé dans une pièce en matière plastique d'adapter ses performances d'utilisation, notamment sa distance de communication, en fonction de chaque application. Cela diminue fortement les coûts de fabrication des pièces traçables.

L'invention permet encore d'incorporer un identifiant dans une zone de dimensions réduites de la pièce traçable.

Un procédé de fabrication d'une pièce traçable telle qu'un bac 20 selon l'invention consiste à agencer un identifiant 10, éventuellement revêtu, dans l'empreinte d'un moule puis à y injecter de la matière plastique pour réaliser le surmoulage du bac autour de l'identifiant.

L'identifiant est avantageusement maintenu à l'intérieur de l'empreinte dans une position prédéterminée par un procédé connu tel que par collage, par attraction magnétique, par une dépression...

Une autre solution, représentée à la figure 9, consiste à fixer l'identifiant 10 sur l'extrémité libre 50 d'un doigt escamotable 52 qui est située dans une position prédéterminée à l'intérieur de l'empreinte 54 du moule 58.

La fixation de l'identifiant 10 est ici obtenue à l'aide d'un dispositif 56 par attraction magnétique.

Au cours du moulage, lorsque la matière plastique est en contact avec l'identifiant 10, ce dernier est désolidarisé du doigt 52 qui est alors rétracté. L'identifiant 10 est ainsi incorporé dans la paroi 18 du bac 20.

Avantageusement, selon une variante non représentée, le doigt escamotable comporte des moyens d'alimentation automatique d'identifiant vers son extrémité libre.

Lorsque le bac est fabriqué et démoulé, l'antenne intermédiaire 16 est agencée à proximité de l'identifiant électronique 10.

L'invention permet de réaliser de façon simple, économique et fiable une pièce traçable en matière plastique qui peut est suivie facilement pendant toute la durée de son utilisation.

L'invention peut être mise en oeuvre dans de nombreuses applications utilisant des pièces en matière plastique, telles que la logistique et la gestion de ladite pièce elle-même ou du produit contenu dans la pièce.

Par exemple, l'identifiant peut être incorporé dans les parois d'un emballage en matière plastique tel qu'une barquette alimentaire sur laquelle est collée une étiquette portant l'antenne intermédiaire. L'identifiant peut contenir l'origine de l'aliment, son prix, sa durée de conservation, son temps de réchauffage et/ou de cuisson, ces informations pouvant être lues pour faciliter sa gestion et son utilisation. Par exemple, si les appareils ménagers du consommateur sont équipés de lecteurs, il peut savoir ce que contient son réfrigérateur, les dates limites de consommation des produits. De plus, le four se réglera automatiquement pour une préparation optimale de l'aliment.

## Revendications

1. Pièce traçable en matière plastique du type dans une partie de laquelle est incorporé un identifiant électronique (10) qui est constitué d'un circuit intégré (12) comportant une mémoire et d'une antenne (14) de premières dimensions et qui est apte à échanger des données avec un dispositif de lecture et/ou d'écriture (22) éloigné au maximum d'une première distance (d₁) de communication prédéterminée, **caractérisé en ce qu'**une deuxième antenne (16) de deuxièmes dimensions, qui est apte à communiquer sans contact électrique, notamment avec l'identifiant, est agencée à une distance (d) inférieure ou égale à la première distance prédéterminée (d₁) de l'identifiant (10) de façon à former un relais pour augmenter la première distance prédéterminée (d₁) à une deuxième distance maximale (d₂) d'échange des données entre l'identifiant (10) et le dispositif (22) de lecture et/ou d'écriture.

2. Pièce selon la revendication précédente, **caractérisé en ce que** la deuxième antenne (16) est rapportée sur une face (24) de la partie dans laquelle l'identifiant électronique (10) est incorporé.

3. Pièce selon la revendication précédente, **caractérisé en ce que** la deuxième antenne (16) est imprimée sur une face (24) de la partie dans laquelle l'identifiant électronique (10) est incorporé.

4. Pièce selon la revendication 2, **caractérisé en ce que** la deuxième antenne (16) est collée sur une face (24) de la partie dans laquelle l'identifiant électronique (10) est incorporé.

5. Pièce selon la revendication 1, **caractérisée en ce que** la deuxième antenne (16) est portée par un élément supplémentaire rapporté sur la partie dans laquelle l'identifiant électronique (10) est incorporé.

6. Pièce selon la revendication précédente, **caractérisé en ce que** l'élément supplémentaire est une étiquette (30).

7. Pièce selon l'une quelconque des revendications précédentes, **caractérisé en ce qu'**elle consiste en un emballage tel qu'un bac.

8. Pièce selon l'une quelconque des revendications à 1 à 6, **caractérisé en ce qu'**elle consiste en un porte étiquette (42).

9. Procédé de fabrication d'un dispositif traçable selon l'une quelconque des revendications précédentes, **caractérisé en ce que** l'identifiant électronique est incorporé lors d'une étape de moulage dans une partie du dispositif, **en ce que** la pièce est démoulée, puis **en ce que** la deuxième antenne est agencée à une distance (d) inférieure ou égale à la première distance prédéterminée (d₁) de l'identifiant (10).

10. Procédé de fabrication selon la revendication précédente **caractérisé en ce que** préalablement à l'étape de moulage, l'identifiant électronique (10) est conditionné pour faciliter sa manipulation.
